# NEUE EUROPÄISCHE PATENTSCHRIFT

(11) **EP 0 473 569 B2**
(45) Veröffentlichungstag und Bekanntmachung des Hinweises auf die Entscheidung über den Einspruch: **23.05.2001**
(45) Hinweis auf die Patenterteilung: 05.04.1995
(21) Anmeldenummer: 91890187.7
(22) Anmeldetag: 23.08.1991
(51) Int. Cl.: G06K 7/08

(54) **Kontaktloses, induktives Datenübertragungssystem**
Contactless, inductive data transmission system
Système de transmission de données par voie inductive sans contact

(30) Priorität: 23.08.1990 AT 173790
(43) Veröffentlichungstag der Anmeldung: 04.03.1992
(73) Patentinhaber: MIKRON GESELLSCHAFT FÜR INTEGRIERTE MIKROELEKTRONIK MBH, A-8053 Graz (AT)
(72) Erfinder: Koo, Roland, Dipl.-Ing., A-8053 Graz (AT); Holweg, Gerald, Dipl.-Ing., A-8053 Graz (AT)
(74) Vertreter: Groenendaal, Antonius Wilhelmus Maria

(56) Entgegenhaltungen:
- EP-A- 0 242 906
- EP-A- 0 245 605
- WO-A-88/00785
- WO-A-88/03684
- WO-A-89/05067
- AT-A- 373 745

## Beschreibung

Die Erfindung betrifft ein kontaktloses, induktives Datenübertragungssystem zwischen mindestens einer Sende-und Empfangsstation und einem oder mehreren Transpondern, wobei die Sende- und Empfangsstation Einrichtungen zur drahtlosen Übertragung eines Energiesignals an die Transponder, zur Taktübertragungeines in einem Oszillator generierten Systemtaktes und zur Datenübertragung umfaßt, wobei der bzw. die Transponder einen Gleichricher für das empfangene Energiesignal, einen Taktableiter zur Transpondersynchronisation und einen Datenspeicher umfassen und wobei zur Energieübertragung ein in der Sende- und Empfangsstation generiertes HF-Signal vorgesehen ist, das zur Datenübertragung zum Transponder pulsweitenmoduliert ist.

Die Datenübertragung und Datenabfrage zwischen einer gegebenenfalls stationären Sende- und Empfangsstation und einer oder mehreren auch adressierten Transpondern ist eine in den unterschiedlichsten Anwendungsbereichen sehr häufig anzutreffende Aufgabenstellung. Beispiele dafür sind die automatische Straßenmauteinhebung durch selbsttätige Kontaktabbuchung, sobald ein fahrzeugseitiger Transponder eine Sende- und Empfangsstation einer Mautstelle passiert. Identitätsausweise können in Read Only-Betriebsweise kontrolliert werden und Zutrittskontrollsysteme ermöglichen die Ermittlung des Umfanges einer Sperrberechtigung und protokollieren die individuellen Zutritte. Bei Werkzeugwechselsystemen auf Werkzeugmaschinen kann die Steuerung aufgrund der an den einzelnen Werkzeugen vorgesehenen Transponder vorgenommen werden, wobei die Transponderdaten Kenngrößen über Werkzeugtype, Standzeit einschließlich einer Fehlerkorrekturinformation vermitteln.

Zur Lösung der oben definierten Aufgaben sind aus der WO-A-88/03684 Sende- und Empfangsstation bekannt, die die Transponder auf induktiver Basis durch Aussenden eines HF-Signals mit Energie versorgen. Diese Energie wird bei einer Ausführungsform in einem Kondensator gespeichert und zur Aktivierung eines Mikroprozessors im Transponder verwendet, der Speicherdaten an die Sende- und Empfangsstation zurücksendet. Die Digitaltechnik erfordert eine Taktübertragung und eine Synchronisation der in Wechselwirkung tretenden Station. Beim bekannten Datenübertragungssystem wird der Takt durch regelwäßige Unterbrechungen des Energiesignals übertragen. Ferner wird durch einen Kurzschluß des Resonanzkreises im Antennenbereich des Transponders das Hochfrequenzsignal einer Belastungsmodulation unterworfen, die in der Sende- und Emfpangsstation erkennbar ist.

Wesentliche Forderung, die speziell für den Transponder gilt, ist die Erzielung einer minimalen Baugröße. Die Energieversorgung durch Speicherung mittels eines Kondensators verlangt transponderseitig verhältnismäßig große Kondensatoren. Auch der Einbau eines Oszillators zur Datenrücksendung an die Sende- und Empfangsstation ist der Miniaturisierung abträglich. Schließlich erfordert die erwähnte Belastungsmodulation mittels eines Resonanzkreises eine exakte Resonanzfrequenz, deren Einhaltung nicht nur spezielle Bauteile und beispielsweise temperaturkompensierende Maßnahmen erfordern, sondern die auch die Anwendung infolge unterschiedlicher behördlicher Bestimmungen territorial einschränkt.

Die Erfindung zielt darauf ab, ein Datenübertragungssystem der eingangs beschriebenen Art bei kompakter Bauweise, die einer Miniaturisierung durch Single Chip zugänglich ist, so flexibel wie möglich zu gestalten, um allen Anwendungsfällen gerecht zu werden. Dies wird erfindungsgemäß gemäß dem Patentanspruch 1 erreicht. Das Taktsignal wird aus der Trägerfrequenz des HF-Signals abgeleitet und das HF-Signal zur Datenübertragung vom Transponder zur Sende- und Empfangsstation wird durch ein pulscodemoduliertes Signal belastungs-moduliert. Dieses eine in der Sende- und Empfangsstation generierte Signal kann zum bidirektionalen Informationsaustausch gegebenenfalls zur Vollduplexverbindung eingesetzt werden, da es gleichzeitig Energie transportiert, taktet, pulsweitenmodulierte Signale aussendet und vom Transponder in Gegenrichtung durch ein pulscodemoduliertes Signal belastungsmoduliert wird. Diese Technologie ermöglicht geringstmögliche Abmessungen speziell der Transponder und bietet infolge der Pulsweitenmodulation für die zum Transponder gesendete Dateninformation und der pulscodegeführten Belastungsmodulation in Gegenrichtung optimale Betriebssicherheit Es ist zweckmäßig, wenn der bzw. die Transponder einen Antennenkreis aufweisen, der zur Frequenzunabhängigkeit des empfangenen Signales ausschließlich eine oder mehrere Spulen umfaßt. Im Gegensatz zum Stand der Technik sieht der Antennenkreis keinen Resonanzkreis vor. Dadurch ist es nicht erforderlich eine starre Frequenz permanent einzuhalten. So kann beispeilsweise ein Chip für weltweite Anwendung produziert werden, der nach Bedarf die unterschiedlichsten Frequenzen empfangen, auswerten sowie gegebenenfalls zur Rücksendung von Information lastmodulieren kann. Die Spule bzw. Spulen sind in zweckmäßiger -Weise bei integrierter Ausführung des Transponders bzw. der Sende- und Empfangsstation insbesondere als Single-Chip über der aktiven Halbleitertopographie konzentrisch in einer oder in mehreren Ebenen angeordnet, vorzugsweise in einem photolitographischem Verfahren aufgebracht. Durch diese Ausführung wird der flächige Platzbedarf des Chips nicht vergrößert und die Spule bzw. Spulen in den Chip integriert. Um Daten aus dem Speicher des Transponders mittels Belastungsmodulation zur Sende- und Empfangsstation zu übertragen ist es zweckmäßig, wenn die Trägerfrequenz des transponderseitig pulscodemodulierten Signals eine von einem Frequenzteiler abgeleitete, durch Teilung der empfangenen Frequenz des Energieträgers gewonnene Frequenz ist. Damit sinkt der schaltungstechnische Aufwand bei gleichzeitiger Erhöhung der Betriebssicherheit Wie erwähnt, ist das erfindungsgemäße Übertragungssystem nicht an eine feste, für die Transponderschaltung erforderliche Frequenz gebunden und es werden die Daten des Speichers nicht unmittelbar einer Schalteinrichtung zugeführt, sondern es wird das vom Speicherinhalt geführte pulscodemodulierte Signal im Transponder an eine Schalteinrichtung, insbesondere einen Modulationstransistor zum Zu- oder Abschalten einer Induktivität bzw. Teilinduktivität, vorzugsweise der Antennenspule bzw. zur ohmschen Belastung derselben angeschaltet. Während der Austastlücken des von der Sende- und Empfangsstation kommenden pulsweitenmodulierten Signals entfällt im Transponder der Takt, sodaß in den Lücken auch keine Information belastungsmoduliert retourniert wird und daher kein Informationsverlust auftritt. Um eine kontinuierliche Energieversorgung zu sichern ist es zweckmäßig, wenn zur Überbrückung der informationsbedingt auftretenden Austastlücken des Energieträgers im Energieversorgungskreis des Transponders ein Stützkondensatorvorgesehen ist Infolge der sehr kurzen Austastlücken kann der Kondensator sehr klein sein, sodaß keinerlei Platzprobleme in der Topographie des Chips auftreten. Zur Rückgewinnung der von der Sende- und Empfangsstation übertragenen Daten ist der Antennenspule des Transponders ein Demodulator für das pulsweitenmodulierte Signal nachgeschaltet, der einen Pausendetektor und einen Zeit- bzw. Frequenzzähler zur Ermittlung der Signallänge zwischen den Pausen sowie eine Vergleichsschaltung mit einem Schwellenwert zur Differenzierung von Null- und Eins-Signalen aufweist. Umgekehrt ist in der Sende- und Empfangsstation ein an ihre Antenne angeschaltetes Filter mit Demodulator der Amplitudenmodulation des transponderseitig belastungsmodulierten Energieträgers vorgesehen, wobei vorzugsweise eine zweite Demodulatorstufe zur Darstellung des vom Transponder kommenden Bitstromes angeschlossen ist Im Sinne einer variablen extensiven Anwendungsmöglichkeit sind Modulator und Demodulator der Sende- und Empfangsstation über eine Schnittstelle an eine Datenverarbeitungsanlage angeschlossen.

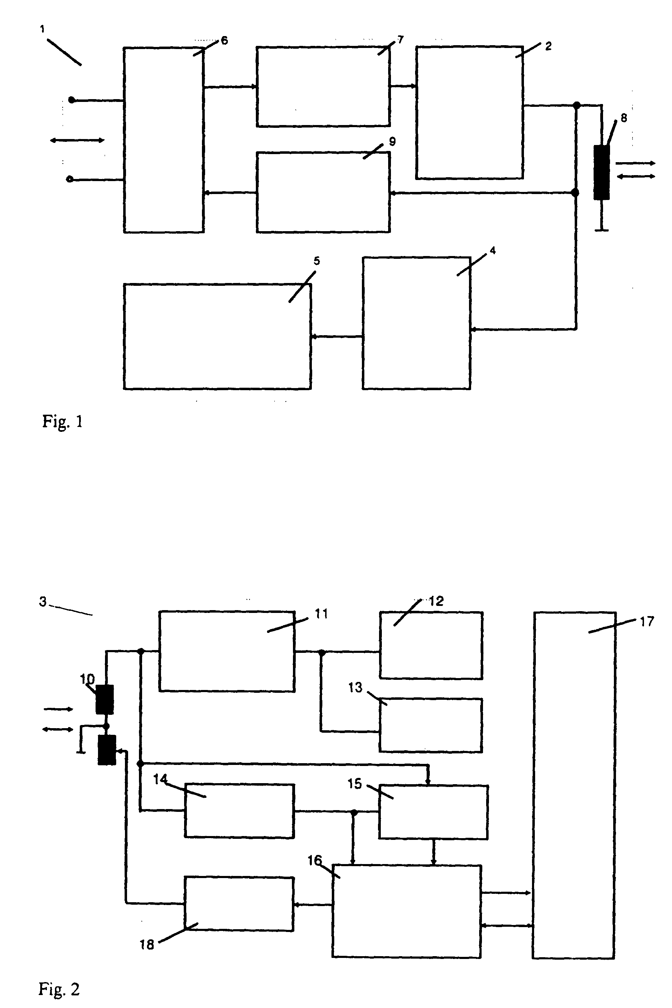

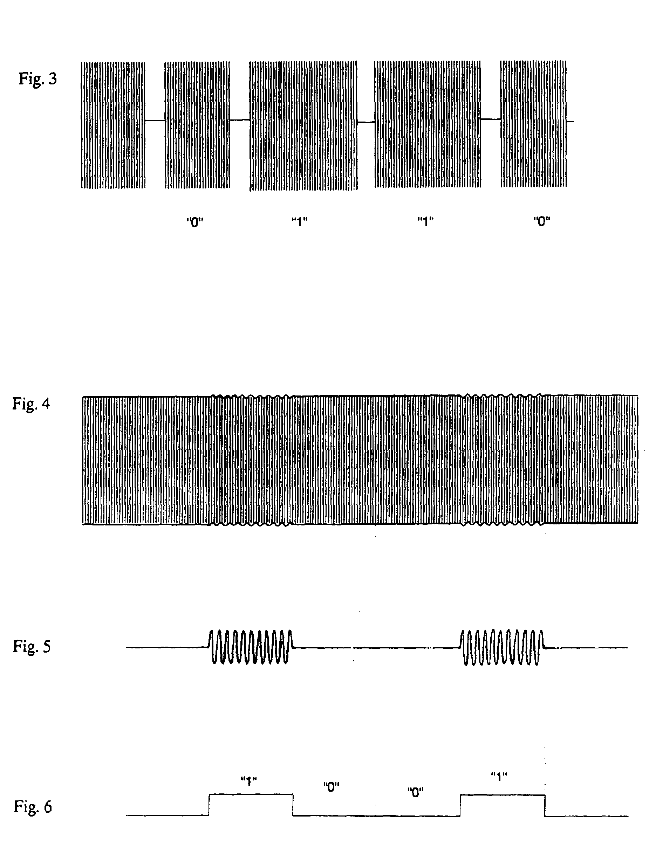

Ein Ausführungsbeispiel eines Datenübertragungssystems gemäß der Erfindung ist in Form von Prinzipschaltbildern und Signalen dargestellt Fig. 1 zeigt ein Prinzipschaltbild einer Sende- und Empfangsstation, Fig. 2 ein Prinzipschaltbild eines Transponders, Fig. 3 einen pulsweitenmodulierten Energieträger, Fig. 4 einen belastungsmodulierten Energieträger, Fig. 5 das aus Fig. 4 gewonnene Signal nach der ersten und Fig. 6 nach der zweiten Demodulationsstufe.

Gemäß Fig. 1 wird in einer Sende- und Empfangsstation 1 in einem Oszillator ein HF-Signal zur Übertragung von Energie, Takt und Information an einen Transponder 3 (Fig. 2) generiert Die Frequenz des HF-Signals führt den Systemtakt (Zeitbasis) sowohl in der Sende- und Empfangsstation als auch in dem damit synchronisierten Transponder 3. Dieser Systemtakt wird aus dem HF-Signal des Oszillators 2 in einen Taktableiter 4 gewonnen. Eine Kontrolleinheit 5 dient als übergeordnete Steuerung für die Sende- und Empfangsstation 1. Ferner führt das vorzugsweise zu 100 % amplitudenmodulierte HF-Signal dem batterielosen Transponder 3 Energie zu. Die Information, die über eine Schnittstelle 6 aus einem Speicher einer Datenverarbeitungsanlage fließt, wird über einen Modulator 7 dem HF-Signal des Oszillators 2 durch Pulsweitenmodulation aufmoduliert. Diese Modulationsart bewirkt Austastlücken, welchen eine größere oder kleinere Anzahl von HF-Schwingungen bzw. anders ausgedrückt, ein längeres oder kürzeres HF-Signal folgt Die Signallänge nach jeder Austastlücke bzw. die Anzahl der Schwingungen sind ein Kriterium für eine Null- oder Einsinformation der im Digitalsystem zu übertragenden Daten. Dieses pulsweitenmodulierte, taktführende und energietransportierende HF-Signal ist in Fig. 3 dargestellt. Es wird gemäß Fig.1 über eine Antennenspule 8 vom Oszillator 2 ausgekoppelt.

Die Schaltung nach Fig. 1 zeigt ferner noch einen Demodulator 9, der für bidirektionalen gegebenenfalls in Vollduplex erfolgenden Informationsfluß eine Information über die Antennenspule 8 erhält und der Schnittstelle 6 zur Datenverarbeitungsanlage weiterleitet. Auf diesen Schaltkreis wird im Zusammenhang mit den Fig. 2 und 4 bis 6 noch in weiterer Folge eingegangen.

Ein Transponder 3 umfaßt eine Antennenspule 10 mit nachgeschaltetem Gleichrichter 11 und einem Spannungsregler 12 sowie einem Reset-Generator 13, der die gesamte Transponderschaltung bei Unterschreiten einer den Betrieb noch zuverlässig gewährleistenden Minimalspannung sperrt. Die Energieversorgung erfolgt bei Annäherung des bzw. eines der Transponder an die bzw. eine Sende- und Empfangsstation 1 aufgrund des übertragenen HF-Signals. Der Transponder 3 erfaßt den Systemtakt in einem Taktableiter 14 und demoduliert das über die Antennenspule einlangende pulsweitenmodulierte HF-Signal in einen Demodulator 15. Dieser umfaßt einen Pausendetektor zur Feststellung der Austastlücken (Fig. 3) zwischen den Signalblöcken und einen Zähler, der die Länge des Signalblockes durch Frequenzimpulszählung feststellt und mit einem Schwellenwert vergleicht. Kurze Signalblöcke deren Schwingungsanzahl unter dem Schwellenwert liegt, stellen ein Null-Signal und lange Signalblöcke, deren Schwingungsanzahl über dem Schwellenwert liegt, das Eins-Signal im digitalen Datensystem dar. Über eine Kontrolleinheit 16 gelangen die Daten bzw. gelangt die Information in einen Speicher 17. In der Kontrolleinheit 16 sind alle logischen Funktionen und Abläufe des Transponders 3 zusammengefaßt. Je nach Anwendung können unterschiedliche Übertragungsprotokolle, Datenprüfung, Zugriffskontrollen und andere logische Vorgänge implementiert werden. Als Datenspeicher 17 können EEPROM-Zellen, RAM-Zellen auch mit Stützbatterie oder Verdrahtungsoptionen vorgesehen sein.

Das Datenübertragungssystem zwischen einer oder mehreren Sende- und Empfangsstatinen 1 und vorzugsweise einer größeren Anzahl von Transpondern 3 arbeitet bidirektional mit zeitversetztem Informationsfluß in beide Richtungen oder im Vollduplex mit gleichzeitiger Datenübertragung. Dazu ist im Transponder 3 ein über die Kontrolleinheit 16 und dem Speicher 17 geführter Modulator 18 vorgesehen, der nach Teilung des Systemtaktes des Taktableiters 14 ein die Information tragendes pulscodemoduliertes Signal liefert, welches zur Ansteuerung eines Modulationstransistors eingesetzt wird. Dieserliegt in einem Schaltkreis der Antennenspule 10 und schaltet eine zusätzliche Induktivität bzw. eine Teilwicklung der Antennenspule 10 zu oder ab, je nach der digitalen Signalfolge und der abgeleiteten oben genannten pulscodemodulierten unterteilten HF-Frequenz (Systemfrequenz). Die Änderung der Induktivität bewirkt eine auf die Sende- und Empfangsstation 1 rückwirkende Belastungsmodulation des im Oszillator 2 generierten HF-Signals. Das entsprechende Signal ist in Fig. 4 dargestellt. Der HF-Energieträger ist in Teilbereichen amplitudenmoduliert. Diese Amplitudenmodulation stammt von der informationsabhängig geänderten Belastung durch die variable Impedanz der Antennenspule 10, welche, wie erwähnt, durch Zu-und Abschalten von Spulenwindungen erreicht wird. Dies hat den Vorteil, daß die Antenne zur Energieaufnahme für den Transponder 3 immer zur Verfügung steht, daß das System in weiten Grenzen frequenzunabhängig betrieben werden kann und keinerlei Maßnahmen zur Einhaltung einer starren Frequenz notwendig sind. So kann der Transponder 3 als Massenprodukt jeweils ident hergestellt werden, ohne daß etwa eine Justierung oder Adaptierung für eine vorbestimmte Empfangsfrequenz nötig wäre. Die Komponenten sind monolithisch integrierbar, einschließlich derAntennenspule, die in eine Ebene über die Halbleitertopographie des Chips in konzentrischer Windungsanordnung gelegt werden kann.

In der Sende- und Empfangsstation 1 ist ein Demodulator 9 mit Filter vorgesehen, der die über die Antennenspule 8 erfaßte Belastungsmodulation (HF-Signal gemäß Fig. 4) zu einer Signalfolge gemäß Fig. 5 regeneriert. Eine zweite Demodulationsstufe bewirkt die Rückgewinnung der Bit-Folge der digitalen Signale. Die vom Transponder 3 kommende Information löst in der über die Schnittstelle 6 angeschlossenen Datenverarbeitungsanlage entsprechende befehle und bzw. oder Funktionen aus. Eine Informationsschleife kann auf diese Weise nach Identitätsfeststellung der Transponderadresse und Rückbestätigung (shake hands) zur Steuerung von Abläufen organisatorischer, buchhalterischer oder technischer Art sowie von Regelvorgängen aufgebaut und aufrechterhalten werden.

Zur Energieversorgung des Transponders 3 mit einem hohen Wirkungsgrad wird die Austastzeit (Austastlücken) so gewählt, daß sie einerseits der Demodulator 15 am Transponder 3 zuverlässig erkennen kann, bzw. daß die dadurch bedingte Unterbrechung in der Energieversorgung durch einen möglichst kleinen Stützkondensator überbrückt werden kann. Die Überbrückung der Versorgungslücken wird außerdem dadurch begünstigt, daß in den Austastzeiten auch kein Taktsignal für den Transponder 3 vorhanden ist und dadurch der Stromverbrauch extrem niedrig ist. Wenn im Sende- und Empfangsbereich einer Station 1 mehrere Transponder 3 vorgesehen sind, ergibt sich das Problem der individuellen Identifikation. Diese kann durch sukzessive Abfrage erfolgen. Sobald die Sende- und Empfangsstation 1 durch das Anwesenheitsprotokoll die Anwesenheit von mehreren Transpondern 3 festgestellt hat, beginnt die Abfrage, ob sich ein Transponder aus einer Hälfte der Gesamtanzahl von Transpondern im Erfassungsbereich der Sende- und Empfangsstation 1 befindet. Dies geschieht, indem die Sende- und Empfangsstation ein Abfrageprotokoll sendet. Befindet sich ein Transponder oder mehrere aus der befragten Gruppe im Nahbereich der Sende- und Empfangsstation 1, so antworten diese durch Übertragung ihres individuellen Codes und einiger Prüfbits an die Sende- und Empfangsstation. Antwortet nur ein Transponder, so ist dieser damit bereits identifiziert. Antworten mehrere Transponder, so ergibt sich eine synchrone Überlagerung der Antworten, was im Zusammenhang mit den Prüfbits auf der Sende- und Empfangsstation 1 erkannt wird. Nun startet die Sende- und Empfangsstation eine weitere Abfrage, wobei die befragte Gruppe von Transpondern wieder um die Hälfte reduziert wird. Dies geschieht so lange, bis nur mehr ein Transponder antwortet. Antwortet auf eine Abfrage hin kein Transponder, so wird mit der Unterteilung der komplementären Transpondergruppe fortgesetzt. Wurde ein Transponder identifiziert, so kann eine weitere Identifikation desselben Transponders nach verschiedenen Kriterien verhindert werden. Es kann zum Beispiel ein Zeitfenster definiert werden, während dem ein Transponder nur einmal identifiziert werden darf. Oder es kann sichergestellt werden, daß derselbe Transponder erst wieder identifiziert werden kann, nachdem alle anderen im Erfassungsbereich der Sende- und Empfangsstation befindlichen Transponder identifiziert wurden.

## Patentansprüche

1. Kontaktloses, induktives Datenübertragungssystem zwischen mindestens einer Sende- und Empfangsstation (1) und einem oder mehreren Transpondern (3), wobei die Sende- und Empfangsstation Einrichtungen
- zur drahtlosen Übertragung eines in der Sende- und Empfangsstation generierten HF-Energiesignals an die Transponder,
- zur Taktübertragung eines in einem Oszillator generierten Systemtaktes und
- zur Datenübertragung zum Transponder durch Pulsweitenmodulation des HF-Energiesignals,
wobei der bzw. die Transponder
- einen Gleichrichter für das empfangene Energiesignal
- einen Taktableiter (14) zur Transpondersynchronisation und
- einen Datenspeicher umfassen,
dadurch gekennzeichnet,
daß zur Datenübertragung vom Transponder (3) zur Sende- und Empfangsstation (1) eine von der Frequenz des empfangenen HF-Energiesignals durch Teilung mittels eines Frequenzteilers abgeleitete Trägerfrequenz pulscodemoduliert wird, und daß die Sende- und Empfangsstation (1) ein an ihre Antenne (8) angeschlossenes Filter mit Demodulator (9) zur Amplitudendemodulation des transponderseitig belastungsmodulierten Energieträgers aufweist, wobei zur Darstellung des Bitstromes vorzugsweise eine zweite Demodulationsstufe vorgesehen ist.

2. Kontaktloses, induktives Datenübertragungssystem nach Anspruch 1,
dadurch gekennzeichnet, daß der bzw. die Transponder (3) einen Antennenkreis aufweisen, der zur Frequenzunabhängigkeit des empfangenen Signals ausschließlich eine oder mehrere Spulen (10) umfaßt.

3. Kontaktloses, induktives Datenübertragungssystem nach Anspruch 2,
dadurch gekennzeichnet,
daß die Spule, insbesondere Antennenspule (8, 10) bei integrierter Ausführung des Transponders (3) bzw. allenfalls der Sende- und Empfangsstation (1) insbesondere als Single-Chip über der aktiven Halbleitertopographie konzentrisch in einer oder mehreren Ebenen angeordnet vorzugsweise in einem photolithographischen Verfahren aufgebracht ist.

4. Kontaktloses, induktives Datenübertragungssystem nach einem der Ansprüche 1 bis 3,
dadurch gekennzeichnet,
daß das pulscodemodulierte Signal im Transponder (3) an eine Schalteinrichtung, insbesondere einen Modulationstransistor zum Zu- oder Abschalten einer Induktivität bzw. Teilinduktivität, vorzugsweise der Antennenspule (10) bzw. zur ohmschen Belastung derselben angeschaltet ist.

5. Kontaktloses, induktives Datenübertragungssystem nach einem der Ansprüche 1 bis 4,
dadurch gekennzeichnet,
daß zur Überbrückung der informationsbedingt auftretenden Austastlücken des Energieträgers im Energieversorgungskreis des Transponders (3) ein Stützkondensator vorgesehen ist.

6. Kontaktloses, induktives Datenübertragungssystem nach einem der Ansprüche 2 bis 5,
dadurch gekennzeichnet,
daß der Antennenspule (10) des Transponders (3) ein Demodulator (15) für das pulsweitenmodulierte Signal nachgeschaltet ist, der einen Pausendetektor und einen Zeit- bzw. Frequenzzähler zur Ermittlung der Signallänge zwischen den Pausen sowie eine Vergleichsschaltung mit einem Schwellenwert zur Differenzierung von Null- und Eins-Signalen aufweist.

7. Kontaktloses, induktives Datenübertragungssystem nach einem der Ansprüche 1 bis 6,
dadurch gekennzeichnet,
daß die Sende- und Empfangsstation (1) einen Energie- und Taktoszillator (2) für ein über eine Antenne (8) auskoppelbares HF-Signal aufweist, dem eine vorzugsweise von einer Datenverarbeitungsanlage geführter Modulator (7) zur Pulsweitenmodulation des HF-Signals vorgeschaltet ist.

8. Kontaktloses, induktives Datenübertragungssystem nach Anspruch 7
dadurch gekennzeichnet,
daß Modulator (7) und Demodulator (9) der Sende- und Empfangsstation (1) über eine Schnittstelle (6) an die Datenverarbeitungsanlage angeschlossen sind.

## Claims

1. A contactless, inductive data transmission system between at least one transmitting and receiving station (1) and one or several transponders (3), in which the transmitting and receiving station comprises devices
- for the wireless transmission of a HF energy signal generated in the transmitting and receiving station to the transponder,
- for the transmission of a system clock signal generated in an oscillator, and
- for data transmission to the transponder by pulse width modulation of the HF energy signal,
and in which the transponder(s) comprise(s)
- a rectifier for the received energy signal,
- a clock extractor (14) for synchronization of the transponder, and
- a data storage memory,
characterized in that a carrier frequency derived from the frequency of the received HF energy signal through division by a frequency divider is pulse code modulated for the data transmission from the transponder (3) to the transmitting and receiving station (1), and in that the transmitting and receiving station (1) comprises a filter with demodulator (9) connected to its antenna (8) for the amplitude modulation of the energy carrier which was load-modulated at the transponder side, while preferably a second demodulation stage is provided for forming the bit stream.

2. A contactless, inductive data transmission system as claimed in claim 1,
characterized in that the transponder(s) (3) comprise(s) an antenna circuit which comprises exclusively one or several coils (10) for achieving the frequency independence of the received signal.

3. A contactless, inductive data transmission system as claimed in claim 2,
characterized in that the coil, in particular antenna coil (8, 10) in an integrated construction of the transponder (3) and/or at least of the transmitting and receiving station (1) is provided in particular as a single chip above the active semiconductor topography concentrically in one or several levels, preferably in a photolithographic process.

4. A contactless, inductive data transmission system as claimed in any one of the claims 1 to 3, characterized in that the pulse code modulated signal is applied to a switching device, in particular a modulation transistor for connecting and disconnecting an inductance or partial inductance, preferably of the antenna coil (10), or for an ohmic loading thereof, in the transponder (3).

5. A contactless, inductive data transmission system as claimed in any one of the claims 1 to 4, characterized in that a support capacitor is provided in the energy supply circuit of the transponder (3) for bridging the blanking intervals of the energy carrier which appear in dependence on the information.

6. A contactless, inductive data transmission system as claimed in any one of the claims 2 to 5, characterized in that a demodulator (15) for the pulse width modulated signal is connected downstream of the antenna coil (10) of the transponder (3), which demodulator comprises a pause detector and a time or frequency counter for determining the signal length between the pauses, as well as a comparison circuit with a threshold value for the differentiation between zero and one signals.

7. A contactless, data transmission system as claimed in any one of the claims 1 to 6, characterized in that the transmitting and receiving station (1) comprises an energy and clock oscillator (2) for a HF signal which can be coupled out through an antenna (8), which oscillator is connected preferably downstream of a modulator (7) controlled by a data processing device for the pulse width modulation of the HF signal.

8. A contactless, inductive data transmission system as claimed in claim 7,
characterized in that the modulator (7) and demodulator (9) of the transmitting and receiving station (1) are connected to the data processing device via an interface (6).

## Revendications

1. Système de transmission de données par voie inductive et sans contact disposé entre au moins une station d'émission et de réception (1) et un ou plusieurs transpondeurs (3), la station d'émission et de réception comprenant des dispositifs
- pour le transfert sans fil d'un signal d'énergie HF généré dans la station d'émission et de réception au transpondeur,
- pour le transfert du rythme d'un rythme du système généré dans un oscillateur et pour le transfert de données au transpondeur par modulation d'impulsion en largeur du signal d'énergie HF,
le transpondeur ou les transpondeurs comprenant
- un redresseur pour le signal d'énergie reçu
- un dispositif d'extraction du signal de rythme (14) pour la synchronisation des transpondeurs et
- une mémoire de données (17),
caractérisé en ce que
pour le transfert de données à partir du transpondeur (3) à la station d'émission et de réception (1), une fréquence porteuse dérivée de la fréquence du signal d'énergie HF reçu par division à l'aide d'un diviseur de fréquence est modulée par impulsions codées et que la station d'émission et de réception (1) est munie d'un filtre muni d'un démodulateur (9) raccordé à son antenne (8) pour la démodulation d'amplitude de la porteuse d'énergie modulée en charge du côté du transpondeur, un deuxième étage de démodulation étant prévu de préférence pour la représentation du flux binaire.

2. Système de transmission de données par voie inductive et sans contact selon la revendication 1, caractérisé en ce que le ou les transpondeurs (3) présentent un circuit d'antenne comprenant uniquement une ou plusieurs bobines (10) pour assurer l'indépendance de la fréquence du signal reçu.

3. Système de transmission de données par voie inductive et sans contact selon la revendication 2, caractérisé en ce que les bobines, notamment les bobines d'antenne (8, 10) dans une réalisation intégrée du transpondeur (3), respectivement éventuellement de la station d'émission et de réception (1) en particulier sous forme d'une puce unique, sont disposées au-dessus de la topographie à semi-conducteur active de façon concentrique dans un ou plusieurs plans, de préférence par un procédé photo-lithographique.

4. Système de transmission de données par voie inductive et sans contact selon l'une des revendications 1 à 3, caractérisé en ce que le signal modulé par impulsions codées dans le transpondeur (3) est appliqué à un dispositif de commutation, en particulier un transistor de modulation pour la mise en circuit et hors circuit d'une inductance, respectivement d'une inductance partielle, de préférence de la bobine d'antenne (10), le cas échéant, pour la charge ohmique de cette bobine.

5. Système de transmission de données par voie inductive et sans contact selon l'une des revendications 1 à 4, caractérisé par l'utilisation d'un condensateur de support afin de shunter les intervalles de suppression se produisant pour les besoins d'information de la porteuse d'énergie dans le circuit d'alimentation en énergie du transpondeur (3).

6. Système de transmission de données par voie inductive et sans contact selon l'une des revendications 1 à 5, caractérisé en ce que la bobine d'antenne (10) du transpondeur (3) est suivie d'un démodulateur (15) pour le signal modulé par des impulsions en largeur comportant un détecteur de pause et un compteur de temps, respectivement de fréquence pour déterminer la longueur de signal entre les pauses ainsi qu'un circuit de comparaison présentant une valeur de seuil permettant de différencier les signaux de zéro et de un.

7. Système de transmission de données par voie inductive et sans contact selon l'une des revendications 1 à 6, caractérisé en ce que la station d'émission et de réception (1) présente un oscillateur (2) pour l'énergie et pour le signal de rythme pour un signal HF susceptible d'être prélevé à l'aide d'une antenne (8) précédé d'un modulateur (7) pour la modulation d'impulsions en largeur, de préférence sous commande d'une installation de traitement de données.

8. Système de transmission de données par voie inductive et sans contact selon la revendication 7, caractérisé en ce que le modulateur (7) et le démodulateur (9) de la station d'émission et de réception (1) sont reliés par l'intermédiaire d'une interface (6) à l'installation de traitement de données.
